# DEMANDE DE BREVET EUROPEEN

(11) **EP 0 603 034 A1**
(43) Date de publication de la demande: **22.06.1994**
(21) Numéro de dépôt: 93402983.6
(22) Date de dépôt: 10.12.1993
(51) Int. Cl.: H04Q 7/04, H04B 7/26

(54) **Dispositif de synchronisation pour un terminal de radiocommunication**

(30) Priorité: 14.12.1992 FR 9215019
(71) Demandeur: ALCATEL MOBILE COMMUNICATION FRANCE, 75008 Paris (FR)
(72) Inventeur: Pinault, Francis, F-92270 Bois-Colombes (FR)
(74) Mandataire: Pothet, Jean Rémy Emile Ludovic

(57) **Abrégé**

La présente invention concerne un dispositif de synchronisation pour un terminal de radiocommunication.

Le dispositif de synchronisation pour un terminal de radiocommunication prévu pour identifier un canal de contrôle (T) parmi une pluralité de canaux de réception, comprend des moyens (3) pour mesurer la puissance (P) des canaux de réception, des moyens pour établir une liste (5) dans laquelle sont classés ces canaux de réception par ordre de puissance décroissante et des moyens (2, 3, 4) pour rechercher le canal de contrôle parmi les signaux de réception en suivant la liste, et se caractérise en ce qu'il comprend de plus des moyens de sélection pour permettre l'inscription d'un canal de réception dans la liste seulement si sa puissance (P) exède une valeur prédéterminée correspondant à un seuil de détection.

## Description

La présente invention concerne un dispositif de synchronisation pour un terminal de radiocommunication.

Dans les systèmes de radiocommunication, le système paneuropéen cellulaire numérique de radiocommunication connu sous le nom de système GSM par exemple, les communications transitent entre un terminal et une station de base par des canaux de communication véhiculant des signaux radio. De tels systèmes comprennent une pluralité de canaux prévus soit pour l'émission des terminaux à destination des stations de base, soit pour l'émission des stations de base à destination des terminaux.

Parmi ces derniers canaux, figure un canal de contrôle émis en permanence qui permet à un terminal d'accéder au système par la station de base qui émet ce canal afin de pouvoir établir des communications. Le terminal doit donc identifier ce canal de contrôle pour acquérir les informations qui lui permettent de se déclarer dans le système. Parmi ces informations on trouve notamment des informations de synchronisation, c'est pourquoi il est habituel de parler de procédure de synchronisation.

La solution généralement adoptée pour la synchronisation se déroule en deux étapes. Dans un premier temps le terminal mesure la puissance de tous les canaux affectés à la réception. Ensuite, le terminal essaie de se synchroniser sur le canal reçu avec la plus forte puissance et s'il n'y parvient pas, il essaie sur les autres canaux en les prenant par ordre de puissance à la réception décroissante jusqu'à ce qu'il puisse effectivement se synchroniser. Cette solution est d'ailleurs celle qui figure dans les recommandations 4.08 et 5.08 du GSM.

La procédure de synchronisation est engagée systématiquement lorsque le terminal est mis en marche mais aussi, de manière plus générale, à la suite d'une perte de synchronisation, c'est-à-dire lorsque la liaison radio acheminée notamment par le canal de contrôle entre la station de base et le terminal a été interrompue. Cette interruption peut être volontaire, il s'agit par exemple de l'arrêt du terminal, mais elle peut égalament être involontaire. En effet, il peut arriver que le terminal soit provisoirement dans l'impossibilité de se synchroniser car les conditions de réception radio ne sont pas satisfaisantes. C'est par exemple le cas lorsqu'il est dans un tunnel ou plus généralement lorsqu'il se trouve dans une zone d'ombre au sens radio du terme.

Le terminal va alors essayer de se synchroniser successivement sur chacun des canaux de réception durant une période de synchronisation sans y parvenir et va recommencer cette tentative au cours de périodes de synchronisation répétitives jusqu'à ce que les conditions de réception soient à nouveau convenables. Une telle période de synchronisation peut présenter une durée importante qui est fonction du nombre de canaux de réception et du temps alloué au terminal pour tenter de se synchroniser sur un canal. A titre d'exemple, cette période peut être estimée à 14 secondes dans le cadre du système GSM. Durant une période de synchronisation dont la durée est ici prédéterminée le terminal est inapte à établir une communication, il est indisponible.

Le but de la présente invention est donc de réduire cette période de synchronisation.

Ce but est atteint en disposant dans le terminal de radiocommunication un dispositif de synchronisation prévu pour identifier un canal de contrôle parmi une pluralité de canaux de réception, comprenant des moyens pour mesurer la puissance de ces canaux de réception, des moyens pour établir une liste dans laquelle sont classés ces canaux de réception par ordre de puissance décroissante et des moyens pour rechercher le canal de contrôle parmi les signaux de réception en suivant cette liste, et qui comprend de plus des moyens de sélection pour permettre l'inscription d'un canal de réception dans la liste seulement si sa puissance exède une valeur prédéterminée correspondant à un seuil de détection.

Ainsi la période de synchronisation est réduite en proportion du nombre de canaux excédant ce seuil de détection sur le nombre total des canaux de réception. Seuls les canaux pouvant potentiellement permettre au terminal de se synchroniser donnent lieu à une tentative de synchronisation.

De plus le terminal présentant une sensibilité de réception, le canal de contrôle ne pouvant être identifié que si la différence entre sa puissance et cette sensibilité est supérieure à une limite d'évaluation, le seuil de détection a pour valeur la somme de la sensibilité et de cette limite d'évaluation.

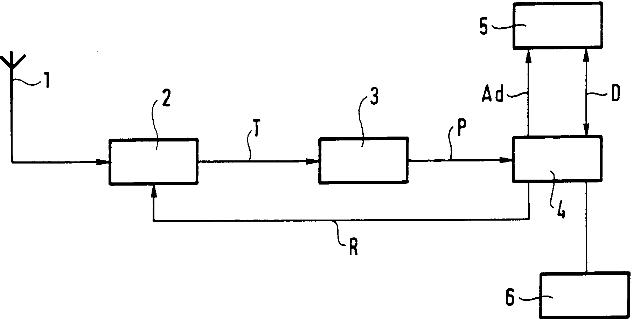

L'invention apparaîtra maintenant de manière plus précise à la lumière de la description d'un mode de réalisation donné à titre d'exemple en se référant à la figure annexée qui représente les éléments d'un terminal nécessaire à sa mise en oeuvre.

Bien qu'il s'agisse d'un abus de langage, pour améliorer la clarté de l'exposé, on assimilera maintenant un canal avec le signal radio qu'il véhicule, chaque canal étant caractérisé ici par la fréquence de l'onde porteuse du signal radio correspondant.

Le terminal, de manière connue, comprend essentiellement une antenne 1 prévue pour la réception de différents canaux, un circuit de réception 2 tel qu'un synthétiseur de fréquence raccordé à l'antenne 1 qui sélectionne parmi ces canaux un canal d'accord T en réponse à un signal de réglage R, un circuit de mesure de puissance 3 qui produit un signal de puissance P représentant la puissance du canal d'accord T, et un circuit de contrôle 4 tel qu'un microprocesseur qui produit le signal de réglage R, qui reçoit le signal de puissance P pour l'enregistrer dans une mémoire de travail 5 au moyen d'un signal de données D à une adresse affectée au canal d'accord T, ceci au moyen d'un signal d'adresse Ad.

De manière connue également, le circuit de contrôle 4 a accès à l'identité de tous les canaux que peut recevoir le terminal. A titre d'exemple, il peut s'agir d'une mémoire de canaux 6 associant pour chacun de ces canaux une valeur de consigne du signal de réglage R à une adresse de la mémoire de travail 5. Ainsi, dans un premier temps, le circuit de contrôle 4 produit le signal de réglage R ayant l'une des valeurs de consigne et enregistre dans la mémoire de travail 5 la valeur du signal de puissance P à l'adresse associée à cette valeur de consigne dans la mémoire de canaux 6. Le circuit de contrôle répète cette opération pour toutes les valeurs de consignes de sorte que la mémoire de travail 5 comprenne une valeur de puissance pour chacun des canaux.

L'invention se propose d'éliminer les canaux qui sont reçus avec une puissance si faible qu'ils ne pourront en aucun cas permettre la synchronisation du terminal.

A cet effet, le circuit de contrôle 4 identifie dans la mémoire du travail 5 tous les canaux pour lesquels la valeur de puissance est inférieure à un seuil prédéterminé de détection en deça duquel la synchronisation est impossible. Ceci peut se faire en positionnant à 1 un indicateur c'est-à-dire un bit spécifique de l'emplacement de l'adresse correspondante dans la mémoire de travail 5, par exemple.

On peut également prévoir que ce seuil soit fonction des caractéristiques du terminal et du canal de contrôle. En effet, le terminal possède une sensibilité qui est la limite de puissance de réception inférieure en deçà de laquelle il ne sait pas discriminer un signal utile du bruit; on parle d'ailleurs également de niveau de bruit du terminal et cette valeur peut être assimilée à la sensibilité.

De plus, le canal de contrôle ne pourra être identifié que si sa puissance excéde le niveau de bruit d'une valeur minimale que l'on appellera limite d'évaluation. En effet, il faut pouvoir distinguer l'information utile contenue dans le canal de contrôle du bruit.

Cette limite d'évaluation est directement fonction des caractéristiques du canal de contrôle et l'on ne peut donc pas en donner une définition générale. Elle correspond à ce que l'homme du métier a pour coutume d'appeler le rapport signal à bruit. Ainsi on peut la déterminer de manière empirique ou théorique.

Dans un mode de réalisation avantageux, le seuil de détection est choisi comme la somme de la sensibilité du terminal et de la limite d'évaluation.

Lorsque les canaux reçus avec une puissance inférieure au seuil de détection ont été identifiés dans la mémoire de travail 5 au moyen des indicateurs, le circuit de contrôle 4 procède à nouveau comme il est connu de le faire en ne considérant toutefois que les seuls canaux pour lesquels cet indicateur n'est pas positionné à un. Il classe ces canaux dans la mémoire de travail 5 par ordre de puissance décroissante en conservant pour chacun une information significative de la valeur de consigne correspondante. Le résultat de cette opération est donc une liste ou figure des valeurs de consignes classées selon l'ordre de puissance décroissante des canaux correspondant.

Le circuit de contrôle 4 produit comme signal de réglage le premier élément de la liste et commande alors le terminal d'une manière connue pour qu'il fasse une tentative de synchronisation sur le canal correspondant. Si la tentative réussit le but est atteint, tandis que si elle échoue il recommence en prenant le deuxième élément de la liste et ainsi de suite jusqu'à la fin de la liste. Si lorsque la liste a été totalement épuisée la synchronisation n'est pas acquise, le circuit de contrôle 4 recommence alors la totalité des opérations décrites ci-dessus en commançant par effectuer à nouveau la mesure de puissance de tous les canaux.

On fournira l'exemple numérique suivant à titre indicatif. La sensibilité du terminal vaut -113dBm la limite d'évaluation vaut 7dB, si bien que le terminal tentera une synchronisation sur les seuls canaux présentant une puissance supérieure à -106dBm.

## Revendications

**1/** Dispositif de synchronisation pour un terminal de radiocommunication prévu pour identifier un canal de contrôle (T) parmi une pluralité de canaux de réception, comprenant des moyens (3) pour mesurer la puissance (P) desdits canaux de réception, des moyens pour établir une liste (5) dans laquelle sont classés lesdits canaux de réception par ordre de puissance décroissante et des moyens (2, 3, 4) pour rechercher ledit canal de contrôle parmi lesdits signaux de réception en suivant ladite liste, caractérisé en ce qu'il comprend de plus des moyens de sélection pour permettre l'inscription d'un canal de réception dans ladite liste seulement si sa puissance (P) exède une valeur prédéterminée correspondant à un seuil de détection.

**2/** Dispositif de synchronisation selon la revendication 1, caractérisé en ce que, ledit terminal présentant une sensibilité de réception, ledit canal de contrôle ne pouvant être identifié que si la différence entre sa puissance et ladite sensibilité est supérieure à une limite d'évaluation, ledit seuil de détection a pour valeur la somme de ladite sensibilité et de ladite limite d'évaluation.
